# EUROPEAN PATENT APPLICATION

(11) **EP 4 550 023 A1**
(43) Date of publication of application: **07.05.2025**
(21) Application number: 22942856.0
(22) Date of filing: 18.11.2022
(51) Int. Cl.: G02B 27/01, G02B 26/08, G02F 1/13357, G02B 1/04

(54) **FRESNEL LENS AND IMAGE GENERATION DEVICE HAVING SAME**

(30) Priority: 18.05.2022 KR 20220060922; 18.05.2022 KR 20220060923
(71) Applicant: LG Electronics Inc., Yeongdeungpo-gu Seoul 07336 (KR)
(72) Inventor: KWEON, Ohjin, Seoul 06772 (KR); LEE, Sungkeun, Seoul 06772 (KR); HWANG, Kwangsuk, Seoul 06772 (KR); KIM, Dongwook, Seoul 06772 (KR)
(74) Representative: Frenkel, Matthias Alexander
(86) International application number: PCT/KR2022/018313
(87) International publication number: WO 2023/224193

(57) **Abstract**

An image generation device having a Fresnel lens, according to the present embodiment, comprises: a light source; a display element spaced apart from the light source; a plurality of lenses arranged between the light source and the display element; and a prism sheet arranged between the plurality of lenses and the display element, wherein the plurality of lenses comprise a Fresnel lens having, on one surface thereof, a plurality of oval grooves formed as concentric circles, the Fresnel lens can adjust the path of light between the light source and the display element, the one surface of the Fresnel lens has the plurality of oval grooves formed as concentric circles, the Fresnel lens has a first curvature in a first direction and a second curvature in a second direction, the first direction and the second direction are orthogonal to each other, and the first curvature and the second curvature can be different.

## Description

### [Technical Field]

The present disclosure relates to a Fresnel lens and an image generation device having the same.

### [Background Art]

An image generation device is a device that generates images and may be used as a light source module of a head-up display (HUD) for a vehicle installed in a vehicle.

An example of a head-up display (HUD) is disclosed in WO 2019/225572 A1 (published on November 28, 2019), and the head-up display comprises a light source, a first optical element that roughly collimates the light from the light source, a second optical element that diffuses the emitted light in a first direction orthogonal to the traveling direction, a third optical element that diffuses the emitted light in a second direction that is perpendicular to the traveling direction and intersects the first direction, a light emitting surface that comprises a liquid crystal display panel that emits display light of an image based on transmitted light and has shaped like a Fresnel lens disposed on a plurality of ellipses when viewed in plan, and a light incident surface of a plurality of cylindrical lens parts extending along a second direction and arranged in a first direction.

### [Disclosure]

### [Technical Problem]

An object of the present embodiment is to provide a Fresnel lens that is asymmetrical in the left and right direction and the up and down direction, may be applied to an augmented reality head-up display.

An object of the present embodiment is to provide a Fresnel lens that facilitates control of the optical path and has improved optical performance.

An object of the present embodiment is to provide an image display unit having a Fresnel lens that may adjust the optical path and may minimize the volume by using a plate-shaped Fresnel lens and a prism sheet.

### [Technical Solution]

An image generation device having a Fresnel lens according to the present embodiment comprises a light source; a display element spaced apart from the light source; a plurality of lenses disposed between the light source and the display element; and a prism sheet disposed between the plurality of lenses and the display element, in which the plurality of lenses may comprise a Fresnel lens with a plurality of oval grooves formed concentrically on one surface.

The Fresnel lens may control the path of light between a light source and a display element, and a plurality of oval grooves may be formed concentrically on one side of the Fresnel lens, the Fresnel lens may have a first curvature in a first direction and a second curvature in a second direction, the first direction and the second direction may be perpendicular to each other, and the first and second curvatures may be different.

The first direction may be a left and right direction and the second direction may be an up and down direction.

The Fresnel lens may be a plate-shaped anamorphic Fresnel lens.

The plurality of lenses may further comprise a fly eye lens; and an illumination lens.

The image generation device having a Fresnel lens may further comprise collimation lens disposed between the light source and the fly eye lens.

The Fresnel lens may be closer to the prism sheet among the illumination lens and the prism sheet.

The image generation device having a Fresnel lens may further comprise a diffuser disposed between the prism sheet and the display element.

The image generation device having a Fresnel lens may further comprise a polarizer disposed between the prism sheet and the diffuser.

The prism sheet may be coupled to the polarizer.

The polarizer may be an absorption polarizer or a reflection polarizer.

### [Advantageous Effect]

According to the present embodiment, the horizontal and vertical curvatures of the Fresnel lens are different, so that the horizontal and vertical light paths may be adjusted to suit the augmented reality head-up display.

Additionally, since a separate flat mirror that reflects light is not required, the volume of the image generation device may be minimized.

### [Description of Drawings]

FIG. 1 is a view illustrating a head-up display for a vehicle comprising an image generation device having a Fresnel lens according to the present embodiment;
FIG. 2 is an enlarged view illustrating an example of an image generation device having a Fresnel lens according to the present embodiment;
FIG. 3 is an enlarged view illustrating another example of an image generation device having a Fresnel lens according to the present embodiment;
FIG. 4 is a schematic view illustrating an optical path of another example of an image generation device having a Fresnel lens according to the present embodiment;
FIG. 5 is a schematic view illustrating a comparative example compared with the image generation device having a Fresnel lens according to the present embodiment;
FIG. 6 is a view illustrating an example of a Fresnel lens according to the present embodiment;
FIG. 7 is a cross-sectional view taken along line X-X' of FIG. 6;
FIG. 8 is a cross-sectional view taken along line Y-Y' of FIG. 6;
FIG. 9 is an enlarged cross-sectional view illustrating a portion of the Fresnel lens according to the present embodiment;
FIG. 10 is a cross-sectional view illustrating a portion of a prism sheet according to the present embodiment;
FIG. 11 is a view illustrating an example in which the horizontal optical path is adjusted by the Fresnel lens according to the present embodiment;
FIG. 12 is a view illustrating an example in which the vertical optical path is adjusted by the Fresnel lens according to the present embodiment;
FIG. 13 is a view illustrating an example in which the horizontal optical path is adjusted by the Fresnel lens of the comparative example;
FIG. 14 is a view illustrating an example in which the vertical optical path is adjusted by the Fresnel lens of a comparative example.

### [Best Mode]

Hereinafter, specific embodiments of the present disclosure will be described in detail along with the drawings.

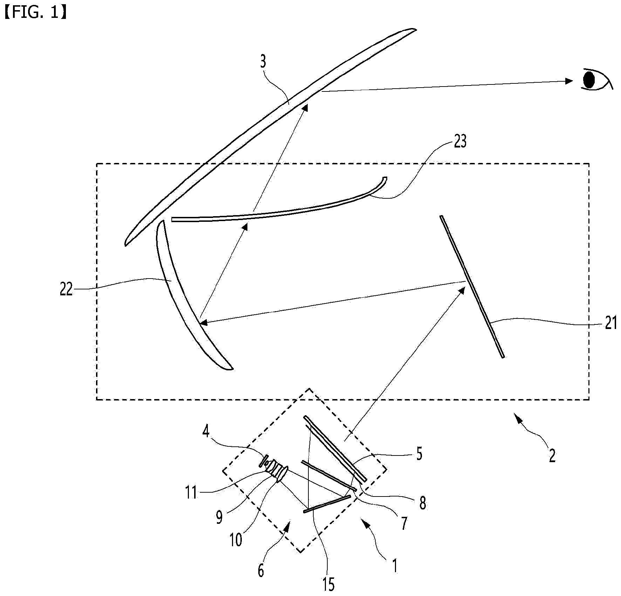

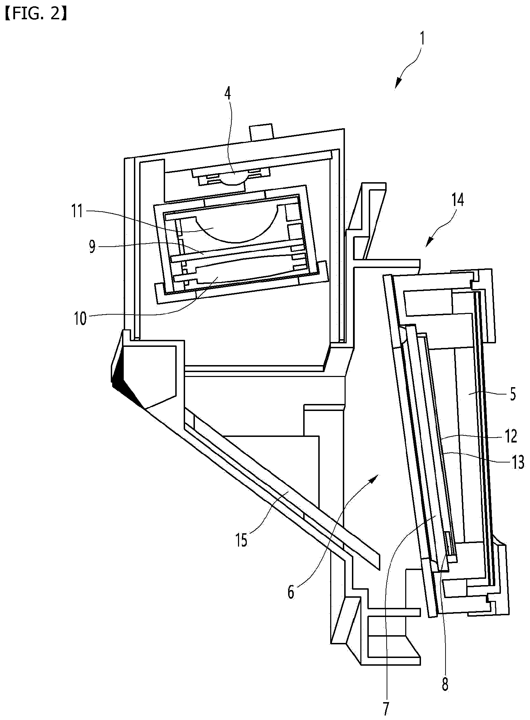

FIG. 1 is a view illustrating a head-up display for a vehicle comprising an image generation device having a Fresnel lens according to the present embodiment, and FIG. 2 is an enlarged view illustrating an example of an image generation device having a Fresnel lens according to the present embodiment;

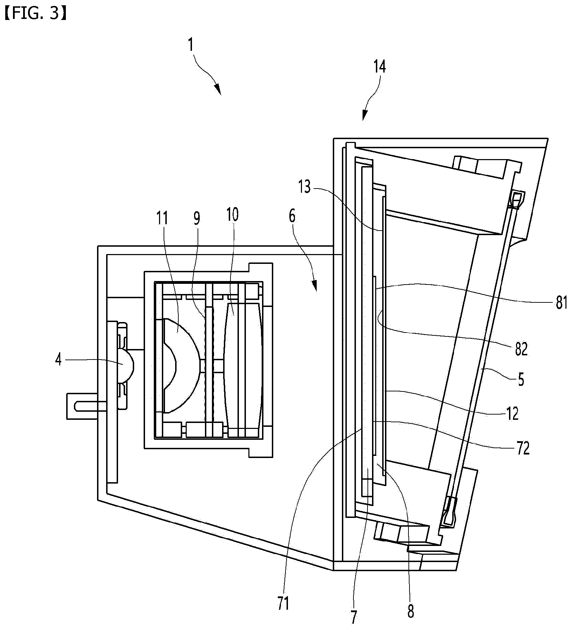

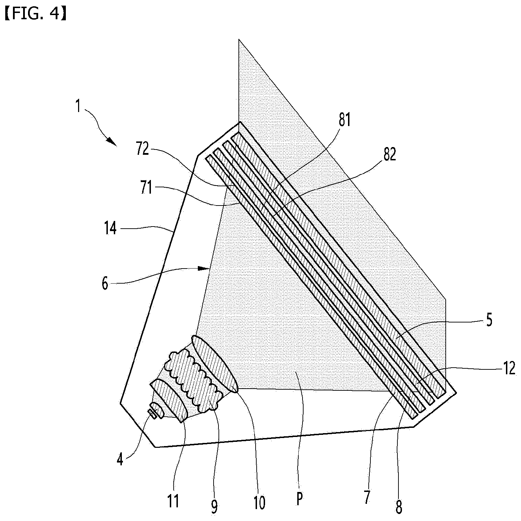

FIG. 3 is an enlarged view illustrating another example of an image generation device having a Fresnel lens according to the present embodiment, and FIG. 4 is a schematic view illustrating an optical path of another example of an image generation device having a Fresnel lens according to the present embodiment;
A head-up display for a vehicle may comprise an image generation device 1 and a virtual image optical system 2, and may irradiate light to a wind shield 3 of the vehicle.

The virtual image optical system 2 may comprise a flat mirror 21, a concave mirror 22, and a cover 23, and may irradiate the virtual image to the windshield 3 of the vehicle.

The flat mirror 21 may reflect light generated from the image generation device 1 to the concave mirror 22.

The concave mirror 22 may be disposed to be spaced apart from the flat mirror 21 and the image generation device 1.

The concave mirror 22 may reflect the light reflected from the flat mirror 21 to the windshield 3 of the vehicle (hereinafter referred to as the windshield).

The cover 23 may cover the opening formed in the housing (not illustrated) of the virtual image optical system 2 and prevent foreign substances such as dust from penetrating the virtual image optical system 2.

The windshield 3 of a vehicle may have a curvature in the vertical direction (that is, up and down direction) and a curvature in the horizontal direction (that is, left and right direction). The curvature in the vertical direction is different from the curvature in the horizontal direction.

The concave mirror 22 may have different vertical and horizontal magnifications due to the curvature of the windshield 3.

It is preferable that the image generation device 1 illuminates the entire area of the virtual image optical system 2 (that is, the area of the display element 5), and at least one of the optical elements used in the image generation device 1 preferably has different vertical and horizontal magnifications, such as the virtual image optical system 2, especially the concave mirror 22.

The image generation device 1 may comprise a light source 4 that generates light and a display element 5 that emits display light of an image and may comprise at least one optical element 6 that adjusts the light path between the light source 4 and the display element 5.

An example of the light source 4 may be an LED.

The display element 5 may be spaced apart from the light source 4. An example of the display element 5 may be an LCD (liquid crystal display device).

A polarizing sheet may be disposed on each of the incident surface and the exit surface of the display element 5, and polarized light may be emitted from the image generation device 1, particularly the display element 5.

The image generation device 1 may also comprise a concave mirror that is the same as or similar to the concave mirror 22 of the virtual image optical system 2. However, when the image generation device 1 comprises a concave mirror, when the light from the light source 4 is directed to the display element 5, an optical path difference may occur between the light corresponding to the upper end of the display element 5 and the light corresponding to the lower end of the display element 5, and the illumination of the image generation device 1 may have low uniformity due to the optical path difference. It is preferred that the image generation device 1 does not comprise a concave mirror.

The optical element 6 (that is, optical component) of the image generation device 1 may comprise a plurality of lenses 7, 8, 9, 10, and 11 disposed between the light source 4 and the display element 5 in the travel direction of light, and the plurality of lenses 7, 8, 9, 10, and 11 may comprise a Fresnel lens 7 and a prism sheet 8. The plurality of lenses 7, 8, 9, 10, and 11 may further comprise a fly eye lens (FFL) 9 and an illumination lens (I-lens) 10.

Hereinafter, the image generation device 1 comprising the Fresnel lens 7 will be described and referred to as the image generation device 1.

A plurality of lenses 7, 8, 9, 10, and 11 may be disposed in the order of a fly eye lens 9, an illumination lens 10, a Fresnel lens 7, and a prism sheet 8 in the travel direction of light.

The Fresnel lens 7 and the prism sheet 8 may freely adjust the optical path (that is, the travel path of light) in the horizontal and vertical directions, other optical components may be disposed on the optical path, and sufficient optical performance may be secured.

The Fresnel lens 7 may control the path of light between the light source 4 and the display element 5.

The Fresnel lens 7 may have a plate shape. The Fresnel lens 7 may be a plate-shaped anamorphic Fresnel lens.

The Fresnel lens 7 may be closer to the prism sheet 8 among the illumination lens 10 and the prism sheet 8.

The Fresnel lens 7 may comprise an incident surface 71 and an exit surface 72, and the exit surface 72 of the Fresnel lens 7 may face the incident surface 81 of the prism sheet 8.

The prism sheet 8 may improve the uniformity of light (illumination) transmitted through the Fresnel lens 7 between the Fresnel lens 7 and the display element 5.

The prism sheet 8 may comprise an incident surface 81 and an exit surface 82, and the exit surface 82 of the prism sheet 8 may face the display element 5.

The plurality of lenses 7, 8, 9, 10, and 11 may further comprise a collimation lens 11 disposed between the light source 4 and the fly eye lens 9.

The fly eye lens 9 may adjust the horizontal and vertical paths of light emitted from the collimation lens 11.

The illumination lens 10 may have a convex shape. The illumination lens 10 may adjust the path of the light passing through the edge of the light passing through the fly eye lens 9 so that the light emitted from the fly eye lens 9 is focused on the Fresnel lens 7.

The Fresnel lens 7 may finely adjust the optical path by lens parameters (for example, curvature, conic coefficient, or the like).

The prism sheet 8 may comprise a plurality of prism portions protruding toward the Fresnel lens 7 and may adjust the optical path in the vertical direction by adjusting parameters such as the pitch between prism portions, the thickness of the prism sheet 8, and the slope and angle of each prism portion.

As described above, when the plurality of lenses 7, 8, 9, 10, and 11 comprise the four types of optical elements 7, 8, 9, and 10 as described above, the image generation device 1 may finely adjust the optical path P, thereby improving optical performance.

The image generation device 1 may further comprise a diffuser 12 disposed between the prism sheet 8 and the display element 5.

The image generation device 1 may further comprise a polarizer 13 disposed between the prism sheet 8 and the diffuser 12.

The polarizer 13 may be coupled to the prism sheet 9, and the polarizer 13 and the prism sheet 9 may be integrated.

An example of the polarizer 13 may be an absorptive polarizer or a reflective polarizer.

The polarizer 13 may be located after the prism sheet 8 in the optical path and may block polarized light to be absorbed by the display element 5 in advance.

The image generation device 1 may further comprise a housing 14, and an optical path may be formed inside the housing 14. The housing 14 may be a combination of a plurality of housing members.

An example of the image generation device illustrated in FIG. 2 may further comprise a flat mirror 15 disposed inside the housing 14. The flat mirror 15 may be placed in the lower part of the space formed inside the housing 14. The flat mirror 15 may reflect the light passing through the illumination lens 14 onto the incident surface 71 of the Fresnel lens 7.

In the image generation device illustrated in FIG. 2, the light emitted from the light source 4 passes through the collimation lens 11, the fly eye lens 9, and the illumination lens 10 in order, and then may be reflected from the flat mirror 15, sequentially transmitted through the Fresnel lens 7, prism sheet 8, polarizer 13, and diffuser 12, and may be incident on the display element 5.

Another example of the image generation device illustrated in FIGS. 3 and 4 is a case where the flat mirror 15 illustrated in FIG. 2 is not comprised, and compared to the image generation device illustrated in FIG. 2, the volume of the image generation device 1 may be minimized.

In the image generation device 1 illustrated in FIG. 3, light passing through the illumination lens 10 may be incident on the incident surface 71 of the Fresnel lens 7.

In the image generation device illustrated in FIG. 3, the light emitted from the light source 4 sequentially passes through the collimation lens 11, the fly eye lens 9, and the illumination lens 10, and then may be incident on the Fresnel lens 7, sequentially transmitted through the Fresnel lens 7, prism sheet 8, polarizer 13, and diffuser 12, and may be incident on the display element 5.

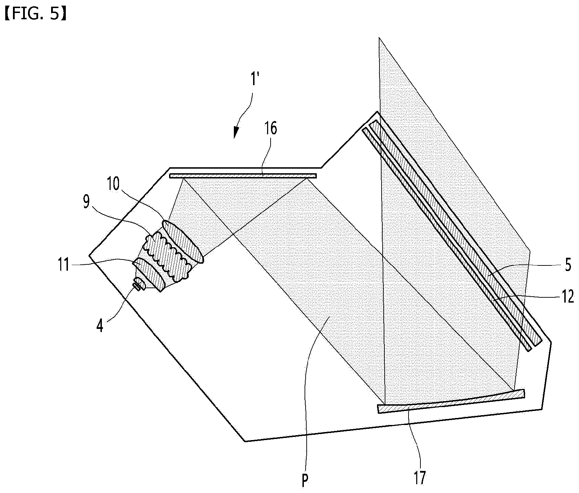

FIG. 5 is a schematic view illustrating a comparative example compared with the image generation device having a Fresnel lens according to the present embodiment.

The comparative example (Comparative Example 1) illustrated in FIG. 5 comprises a light source 4, a collimation lens 11, a fly eye lens 9 and an illumination lens 10, a folding mirror 16, and an illumination mirror 17, the diffuser 12, and the display element 5, but does not comprise the Fresnel lens 7 and prism sheet 8 of the present embodiment.

The folding mirror 16 is disposed on the inner upper side of the housing 14 and may reflect the light passing through the illumination lens 10 to the illumination mirror 17, and the illumination mirror 17 may reflect the incident light into a diffuser 12.

In a comparative example, the light irradiated from the light source 4 passes through the collimation lens 11, the fly eye lens 9, and the illumination lens 10, and after being first reflected from the folding mirror 16, may be secondarily reflected from the illumination mirror 17, and may be incident on the display element 5 through the diffuser 12.

Meanwhile, since the image generation device illustrated in FIGS. 3 and 4 uses a thin plate-shaped anamorphic Fresnel lens 7 and a prism sheet 8, the image generation device may be smaller in volume than the image generation device of the comparative example illustrated in FIG. 5.

Due to the characteristics of the virtual image optical system (2), which has a rectangular image and different horizontal/vertical magnification, optical performance may deteriorate if the image generation device fails to adjust the optical path in the horizontal/vertical directions.

On the other hand, the image generation device of the present embodiment comprises three types of lenses (that is, lie-eye lens 9, illumination lens 10, and Fresnel lens 7) that may freely adjust the optical path in the horizontal and vertical directions, respectively and the prism sheet 8 and thus degradation of optical performance may be minimized.

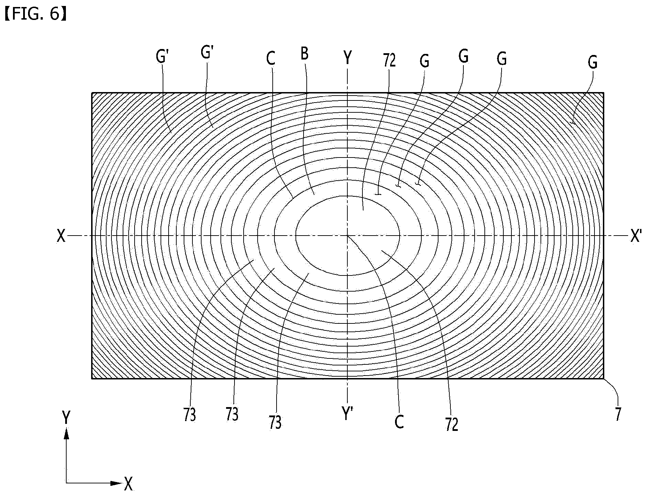

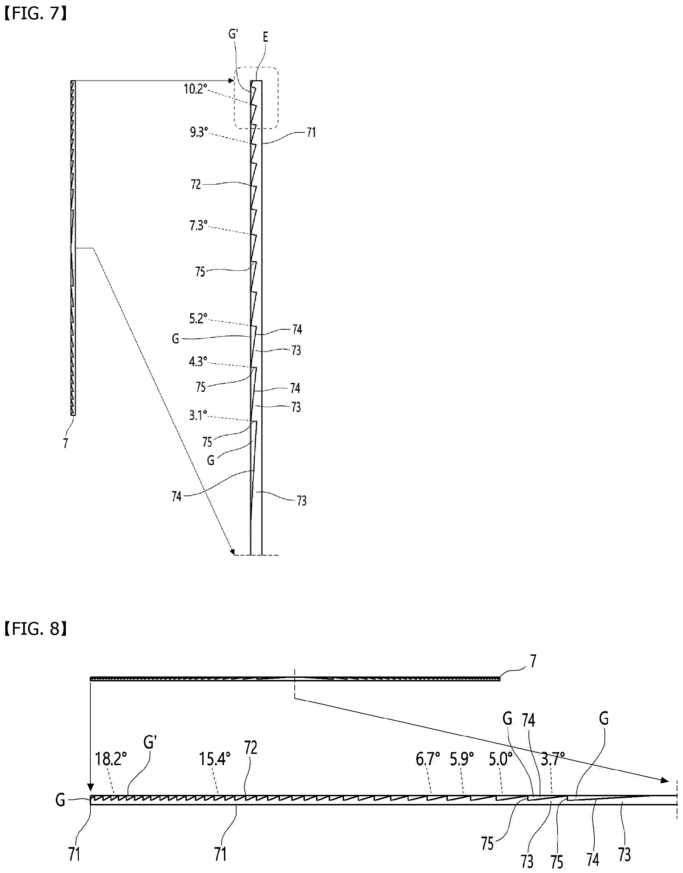

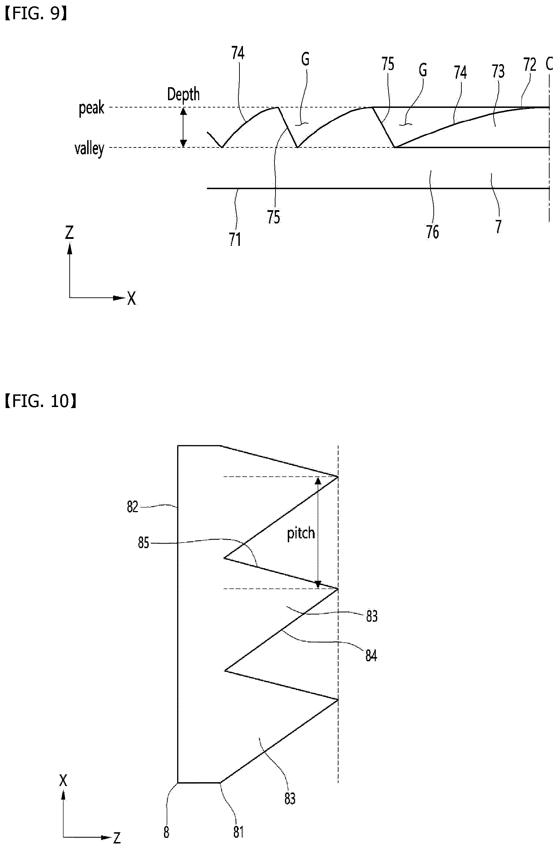

FIG. 6 is a view illustrating an example of a Fresnel lens according to the present embodiment, FIG. 7 is a cross-sectional view taken along line X-X' of FIG. 6, FIG. 8 is a cross-sectional view taken along line Y-Y' of FIG. 6, and FIG. 9 is an enlarged cross-sectional view illustrating a portion of the Fresnel lens according to the present embodiment.

A plurality of oval grooves G may be formed concentrically on one surface of the Fresnel lens 7. One surface 72 on which the plurality of oval grooves G is formed may be the exit surface 72 of the Fresnel lens 7.

The incident surface 71 of the Fresnel lens 7 may be composed of a flat surface or may be composed of a cylindrical lens array, a prism array, or a lens array.

An elliptical groove G may be recessed on the exit surface 72 of the Fresnel lens 7.

The elliptical groove G may be formed so that the length in the left and right direction X is longer than the length in the up and down direction Y.

The Fresnel lens 7 may further comprise a curved groove G' located outside the plurality of elliptical grooves G, and the center of curvature of the curved groove G' may be the same as the center C of the elliptical groove G.

A plurality of curved grooves G' may be formed on the exit surface 72 of the Fresnel lens 7, and the plurality of oval grooves G and the plurality of curved grooves G' may have the same center C.

The Fresnel lens 7 may have a first curvature in the first direction X and a second curvature in the second direction Y. The first direction X and the second direction Y may be perpendicular to each other. The first direction X may be a left and right direction, and the second direction Y may be an up and down direction. Each of the first and second curvatures may comprise a curvature comprising an aspheric coefficient, and the first and second curvatures may be different from each other.

In an example of a Fresnel lens, the first curvature may be greater than the second curvature, and in an example of the Fresnel lens, the first curvature may be smaller than the second curvature.

Hereinafter, a plurality of oval grooves G and a plurality of curved grooves G' formed on the exit surface 72 of the Fresnel lens 7 will be referred to as grooves G and will be described.

The Fresnel lens 7 may have a plurality of lens units 73 (or blades) formed by grooves G. The plurality of lens units 73 may have a three-dimensional shape, and the surface of each of the plurality of lens units 73 may comprise a Fresnel 74 that may form an optical surface and a slope 75 that may form a boundary with other adjacent lens parts.

The area of the Fresnel 74 of the plurality of lens units 73 may decrease as it moves from the center C to the outside. The closer the plurality of lens units 73 are to the center C, the gentler the Fresnel 74 may be, and the closer the Fresnel unit 73 is to the edge E of the lens unit 7, the steeper the Fresnel 74 may be.

As illustrated in FIG. 9, a plurality of lens units 73 may protrude from the flat base 76, and the plurality of lens units 73 may all have the same thickness Depth. Thickness (Depth) may be defined as the distance between the peak and valley of the exit surface 72.

Fresnel 74 may have a convex shape toward the prism sheet 8, and the shape of Fresnel 73 may comprise a curvature comprising an aspheric coefficient in the vertical direction Y and a curvature comprising an aspheric coefficient in the horizontal direction X, and the curvature in the vertical direction Y and the curvature in the horizontal direction X may be different. The aspheric coefficient in the vertical direction Y and the aspheric coefficient in the horizontal direction X may form orthogonal axes.

The slope 75 may be consistent with the direction of light.

In the Fresnel lens 7, the inclination of the slope 75 may vary according to the position and axis (vertical and horizontal directions), and light being trapped in the Fresnel lens 7 may be minimized and performance degradation may be minimized.

As an example of the manufacturing method of the Fresnel lens 7, it is possible to form the shape of a plurality of lens units 73 by placing resin on a rectangular transparent plastic or glass substrate and using a processed mold. In this case, it goes without saying that the Fresnel lens 7 may be made of circular or polygonal substrates in addition to rectangular substrates.

As another example of the manufacturing method of the Fresnel lens 7, it is possible to form the shape of a plurality of lens units 73 by directly processing the plastic substrate.

As another example of the method of manufacturing the Fresnel lens 7, it is also possible to directly process some areas of the plastic substrate and imprint resin on other areas of the plastic substrate to have different refractive indices for each area.

The method of forming the shape of the Fresnel 74 and the shape of the slope 75 is as follows.

A curved surface is created with the vertex of the lens center C of the Fresnel lens 9 as the peak, and the curved surface parameters of the lens, such as curvature, conic constant, and Depth, may be set according to the manufacturer's intention.

The shape of the lens is drawn using the parabolic equation, and the height in the Z direction is determined according to the set Depth value.

The number of steps of a Fresnel lens is determined by the curved surface parameters (curvature, Conic constant). Here, step refers to how many optical surfaces of the lens are divided.

The light from the light source 4 passes through the optical system 11, 9, 10 and enters the Fresnel lens 7, if the angles of the plurality of slopes 75 are all the same, when the light departing from the light source 4 passes through the incident surface 71 passes through the exit surface, hits the slope of the next adjacent step in the X or Y direction centered on the optical axis z, and then may be reflected or refracted in an unintended direction, resulting in loss of lighting efficiency.

In the present embodiment, it is desirable to vary the angle of the slope 75 for each location in order to prevent lighting efficiency from being reduced.

The angle of the slope 75 centered on the Z axis increases as it approaches the outer edge E of the Fresnel lens 7, and the central portion of the Fresnel lens 7 receives light that is close to vertical from the light source 4, The light enters the outside of the Fresnel lens 7 at a larger angle than the center, and the Fresnel lens 7 preferably improves lighting efficiency by matching the angle of the light and the slope 75 at each location.

For this purpose, the angle of the slope 75 may be set by dividing it into the vertical axis Y and the horizontal axis X, and is calculated from the center C to the end E of the Fresnel lens 7 and thus a cross-sectional shape may be created.

The elliptical shape that exists between the vertical axis Y and the horizontal axis X of the Fresnel lens 7 may be created using the elliptic equation, and may be formed by dividing it into a valley and a peak.

By connecting the cross section of the vertical axis Y and the cross section of the horizontal axis X to form a surface, the manufacturer may design a Fresnel lens 7 of the desired shape.

As described above, the Fresnel lens 7 may have different lens curvatures of the two axes X, Y orthogonal to the plane perpendicular to the thickness direction, and the curvature may comprise an aspheric coefficient, and the curvature of the two axes X and Y may be different according to the location of the slope 75.

Since the lens curvatures of the vertical and horizontal axes are different, the Fresnel lens 7 has different slope angles (75) for each position in the same step, and in a state where the thickness of the central portion C and the outer portion E are the same, according to the position of the slope 75, the slope 75 may have different angles, and light efficiency may increase.

FIG. 10 is a cross-sectional view illustrating a portion of a prism sheet according to the present embodiment.

A plurality of prisms 83 may be formed on the incident surface 81 of the prism sheet 8.

A plurality of prism units 83 may be formed on the incident surface 81 of the prism sheet 8. Each of the plurality of prism units 83 may protrude from the incident surface 81 of the prism sheet 8. The plurality of prism units 83 may be formed at a set pitch.

One surface of the plurality of prism units 83 may form a prism 84, and the other surface of the plurality of prism units 83 may form a slope 85.

The slope 85 may have a slope angle centered on the Z axis.

The prism sheet 9 may adjust the vertical light path by adjusting the pitch, the angle of the slope 85, and the slope thickness.

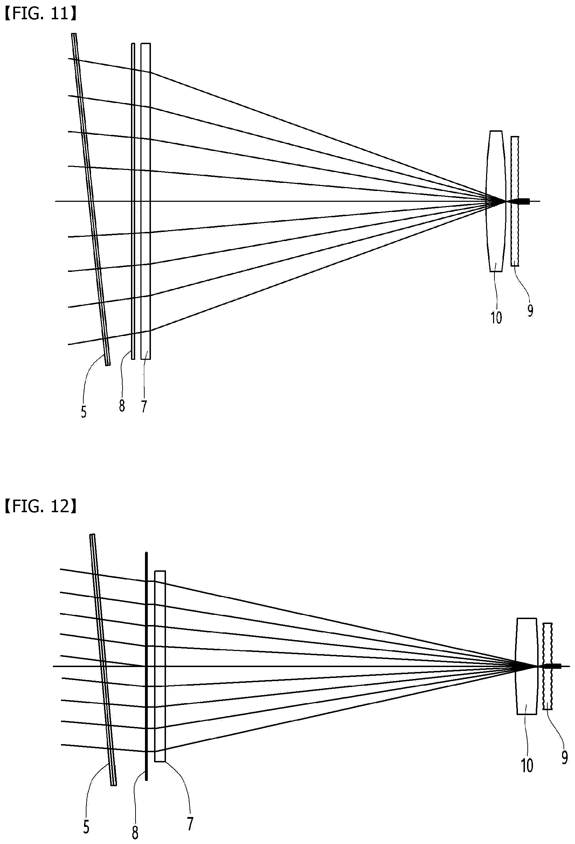

FIG. 11 is a view illustrating an example in which the horizontal optical path is adjusted by the Fresnel lens according to the present embodiment, and FIG. 12 is a view illustrating an example in which the vertical optical path is adjusted by the Fresnel lens according to the present embodiment.

As illustrated in FIGS. 11 and 12, the anamorphic Fresnel lens 7 according to the present embodiment may have different parameters applied in the horizontal direction X and vertical direction Y and optical path control may be possible in each direction X, Y, and the optical path of the virtual image ray and the optical path of the illumination ray may be matched.

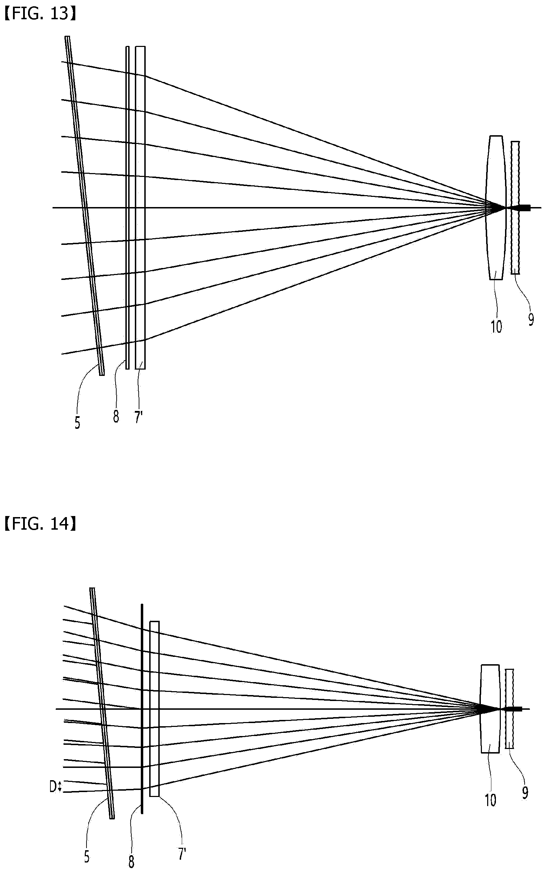

FIG. 13 is a view illustrating an example in which the horizontal optical path is adjusted by the Fresnel lens of the comparative example, and FIG. 14 is a view illustrating an example in which the vertical optical path is adjusted by the Fresnel lens of a comparative example.

The Fresnel lens 7' of the comparative example (Comparative Example 2) is an example of applying the same parameters to the horizontal direction X and the vertical direction Y, where the curvature in the horizontal direction X and the curvature in the vertical direction Y are the same.

As illustrated in FIGS. 13 and 14, the Fresnel lens 7' of the comparative example may match the optical path in only one of the horizontal direction X and the vertical direction Y, and distort the optical path in the other of the horizontal direction X and the vertical direction Y, and a difference in the optical path D may occur.

The above description is merely an illustrative explanation of the technical idea of the present disclosure, and various modifications and variations will be possible to those skilled in the art without departing from the essential characteristics of the present disclosure.

Accordingly, the embodiments disclosed in the present disclosure are not intended to limit the technical idea of the present disclosure, but are for illustrative purposes, and the scope of the technical idea of the present disclosure is not limited by these embodiments.

The scope of protection of the present disclosure should be interpreted in accordance with the claims below, and all technical ideas within the equivalent scope should be interpreted as being included in the scope of rights of the present disclosure.

## Claims

1. A Fresnel lens that controls a path of light between a light source and a display element,
wherein a plurality of oval grooves is formed concentrically on one surface of the Fresnel lens,
wherein the Fresnel lens has a first curvature in a first direction and a second curvature in a second direction,
wherein the first direction and the second direction are perpendicular to each other, and
wherein the first and second curvatures are different.

2. The Fresnel lens of claim 1,
wherein the first direction is a left and right direction, and
wherein the second direction is an up and down direction.

3. The Fresnel lens of claim 1,
wherein the Fresnel lens is a plate-shaped anamorphic Fresnel lens.

4. An image generation device having a Fresnel lens, comprising:
a light source;
a display element spaced apart from the light source;
a plurality of lenses disposed between the light source and the display element; and
a prism sheet disposed between the plurality of lenses and the display element,
wherein the plurality of lenses comprises a Fresnel lens with a plurality of oval grooves formed concentrically on one surface, and has a first curvature in a first direction and a second curvature in a second direction,
wherein the first direction and the second direction are perpendicular to each other, and
wherein the first and second curvatures are different.

5. The image generation device having a Fresnel lens of claim 1,
wherein the first direction is a left and right direction and the second direction is an up and down direction.

6. The image generation device having a Fresnel lens of claim 1,
wherein the Fresnel lens is a plate-shaped anamorphic Fresnel lens.

7. The image generation device having a Fresnel lens of claim 1,
wherein the plurality of lenses further comprises:
a fly eye lens; and
an illumination lens.

8. The image generation device having a Fresnel lens of claim 1,
wherein the plurality of lenses further comprise a collimation lens disposed between the light source and the fly eye lens.

9. The image generation device having a Fresnel lens of claim 1,
wherein the Fresnel lens is closer to the prism sheet among the illumination lens and the prism sheet.

10. The image generation device having a Fresnel lens of claim 1, further comprising:
a diffuser disposed between the prism sheet and the display element.

11. The image generation device having a Fresnel lens of claim 10, further comprising:
a polarizer disposed between the prism sheet and the diffuser.

12. The image generation device having a Fresnel lens of claim 11,
wherein the prism sheet is coupled to the polarizer.

13. The image generation device having a Fresnel lens of claim 11,
wherein the polarizer is an absorption polarizer or a reflection polarizer.
